# EUROPÄISCHE PATENTSCHRIFT

(11) **EP 0 470 285 B1**
(45) Veröffentlichungstag und Bekanntmachung des Hinweises auf die Patenterteilung: **02.03.1994**
(21) Anmeldenummer: 90115305.6
(22) Anmeldetag: 09.08.1990
(51) Int. Cl.: B23B 29/24, B23B 51/08

(54) **Schneidewerkzeug für die Bearbeitung von Innen- und Aussenkonturen an Werkstücken**
Cutting tool for the machining of internal and external shapes on workpieces
Outil de coupe pour l'usinage de contours internes et externes sur des pièces

(43) Veröffentlichungstag der Anmeldung: 12.02.1992
(73) Patentinhaber: MAPAL Fabrik für Präzisionswerkzeuge Dr. Kress KG, D-73431 Aalen (DE)
(72) Erfinder: Fees, Heiner, Dipl.-Ing. (BA), D-7120 Bietigheim-Bissingen (DE); Goetz, Manfred, D-8540 Schwabach (DE)
(74) Vertreter: Gleiss, Alf-Olav, Dr.jur. Dipl.-Ing.

(56) Entgegenhaltungen:
- EP-A- 0 028 705
- CH-A- 452 320
- DE-A- 3 502 346
- DE-U- 8 321 950
- FR-A- 2 509 642

## Beschreibung

Die Erfindung geht aus von einem Schneidwerkzeug nach der Gattung des Hauptanspruchs, siehe DE-U-8 321 950.

Bei einem bekannten Schneidwerkzeug (DE-AS 16 02 854), das eine Bohrstange als Werkzeuggrundkörper hat, ist ein Schneidplattenträger in einem im Querschnitt rechteckigen Querloch der Bohrstange eingesteckt und durch eine in der Bohrstange drehbar gelagerte Klemmschraube gegen die eine flache Seitenwand des Querlochs gespannt. Zur radialen Einstellung des Schneidplattenträgers ist ein den vom Schneidplattenträger freigelassenen Bereich des Querlochs zentral durchsetzender Gewindebolzen vorgesehen, der in eine Gewindebohrung im Schneidplattenträger eingreift und sich außen am Umfang der Bohrstange über ein Formstück abstützt. Zusätzlich dazu ist eine weitere Schraube vorgesehen, die ein Längsverschieben des Gewindebolzens verhindert und den Schneidplattenträger zusätzlich zu dem durch Anziehen der Klemmschraube hervorgerufenen Reibungsschluß gegen Bearbeitungsdruck abstützt. Diese Ausführung ist nachteilig, weil der Schneidplattenträger nur quer zur Bohrstangenachse verstellt werden kann und sich diese Ausführung daher für Stufenwerkzeuge zur gleichzeitigen Innen- und Außenrundbearbeitung von Werkstücken nicht eignet.

### Vorteile der Erfindung

Die erfindungsgemäße Anordnung mit den kennzeichnenden Merkmalen des Hauptanspruchs zeichnet sich durch einen besonders starren und kompakten Aufbau aus, der zudem auch die Möglichkeit eröffnet, die Position der Schneidplatte bzw. eines daran befestigten Schneidkörpers am Werkzeuggrundkörper in zwei Achsrichtungen einstellbar zu machen.

Durch die flache Bauweise und die Möglichkeit, die Schneidkante an einer frei zugänglichen Ecke der Schneidplatte anzuordnen, eignet sich das erfindungsgemäß ausgebildete Werkzeug insbesondere auch für die Herstellung von Sack- und Stufenbohrungen, sowie für die Bearbeitung von ebenen Ringschultern am Werkstück. Durch den kompakten Aufbau, der sich u. a. dadurch ergibt, daß das Spannstück gleichzeitig Verstellelement ist, ist es möglich auch extrem kleine Bohrungen mit höchster Präzision zu bearbeiten. Durch die Möglichkeit, die Anlagefläche zwischen der Schneidplatte und dem Spannstück und zwischen diesem und dem Werkzeuggrundkörper ausreichend groß zu bemessen, kann ein radiales Herausfliegen der Schneidplatte aus der Haltung am Werkzeuggrundkörper mit Sicherheit vermieden werden. Infolge der relativ großen Auflagefläche der Schneidplatte am Werkzeuggrundkörper kann das erfindungsgemäß ausgebildete Werkzeug auch höhere Haltekräfte aufbringen.

Durch die in den Unteransprüchen aufgeführten Maßnahmen sind vorteilhafte Weiterbildungen der Anordnung nach dem Hauptanspruch möglich.

Bei einer Ausbildung des Werkzeugs gemäß den Merkmalen des Anspruchs 2 kann die Schneidplatte bzw. -kante in zwei Richtungen eingestellt werden, was insbesondere bei Mehrfachwerkzeugen vorteilhaft ist.

Eine besonders einfache und kompakte Ausführung ergibt sich mit den Merkmalen des Anspruchs 3.

Zur zusätzlichen Abstützung der Schneidplatte gegen Bearbeitungsdruck kann gemäß Anspruch 4 das Einstell- und Abstützelement vorteilhaft auf das Spannstück einwirken. Das Einstell- und Abstützelement kann zweckmäßig gemäß den Merkmalen des Anspruchs 5 ausgebildet sein. Bei Schneidwerkzeugen mit Verstellbarkeit der Schneidplatte in zwei Richtungen können beide Einstell- und Abstützelemente gemäß den Merkmalen des Anspruchs 6 angeordnet sein, so daß sie von ein und derselben Seite des Werkzeuggrundkörpers zugänglich sind.

Eine besonders vorteilhafte Ausbildung der Schneidplatte ergibt sich mit den Merkmalen des Anspruchs 7. Bei einer derartigen Ausführung können mehrere Aufnahmen für Schneidenkörper mit unterschiedlichen Geometrien auf der Schneidplatte vorgesehen werden, wodurch der Anwendungsbereich des Werkzeugs erheblich erweitert wird.

Die erfindungsgemäße Ausbildung des Schneidwerkzeugs läßt sich auch realisieren, indem der Schneidplattenträger aus dem entsprechenden Schneidstoff gefertigt wird und somit selbst zur Schneidplatte wird.

### Zeichnung

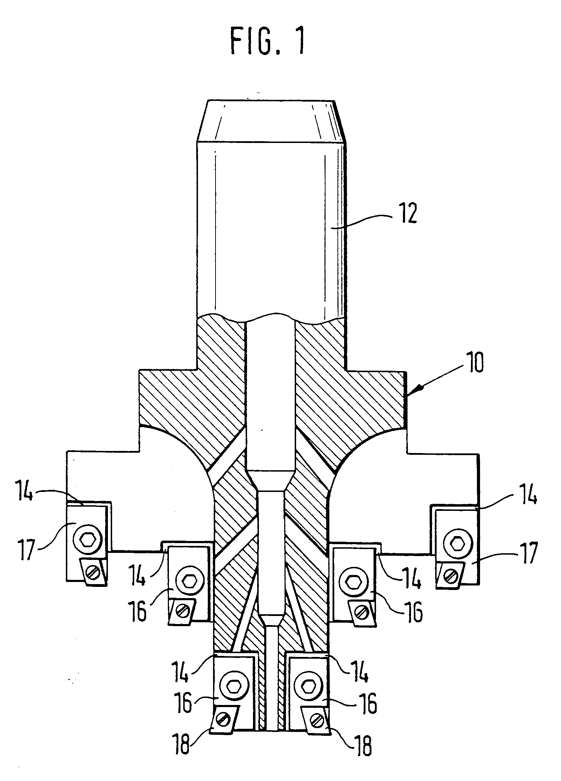

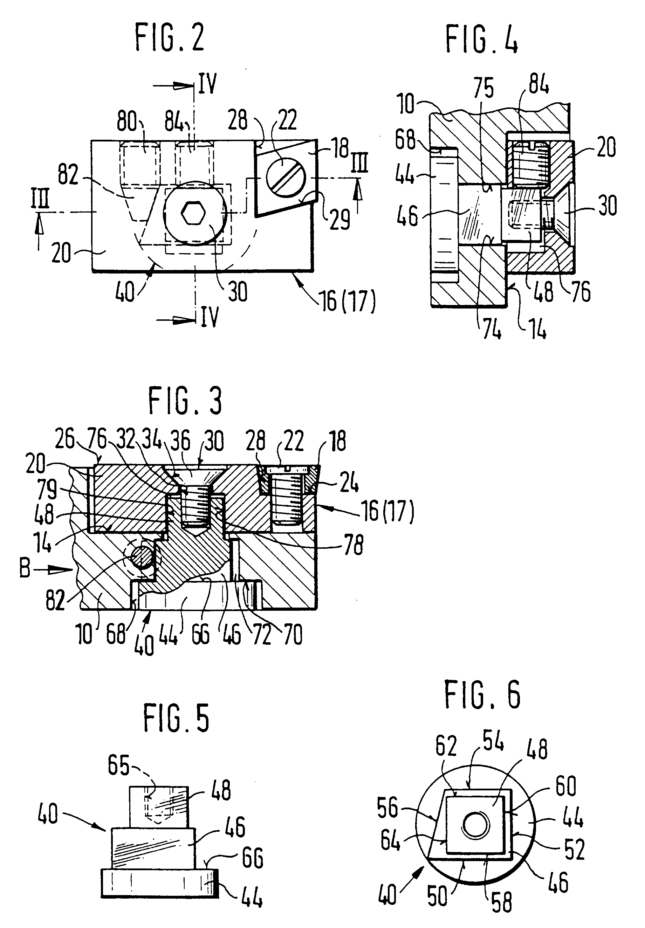

Ein Ausführungsbeispiel der Erfindung ist in der Zeichnung dargestellt und in der nachfolgenden Beschreibung näher erläutert. Es zeigen Figur 1 die Draufsicht auf ein Komplettwerkzeug für Innen- und Außenrundbearbeitung mit mehreren Schneidplatten, Figur 2 eine Ansicht einer Schneidplatte in vergrößertem Maßstab, Figur 3 einen Schnitt nach der Linie III-III in Figur 2, Figur 4 einen Schnitt nach der Linie IV-IV in Figur 2, Figur 5 eine Seitenansicht eines erfindungsgemäß ausgebildeten Spannstückes und Figur 6 eine Draufsicht auf das Spannstück nach Figur 5.

### Beschreibung des Ausführungsbeispiels

Das Werkzeug hat einen Grundkörper 10, der mit einem Einspannschaft 12 und mit mehreren Auflageflächen 14 für Werkzeugkassetten 16 zur Innenrundbearbeitung und prinzipiell gleich aufgebauten Werkzeugkassette 17 zur Außenrundbearbeitung versehen ist. Jede Kassette 16 bzw. 17 besteht aus einem das eigentliche Schneidelement bildenden Schneidenkörper 18 und einem Plattenträger 20, auf welchem der Schneidenkörper 18 durch eine Schraube 22 festgespannt ist. Der Schneidenkörper 18 sitzt auf einem vertieften Bereich 24 der freien Seitenwand 26 des Plattenträgers 20 auf, der an zwei Wandabschnitten 28, 29 in den nicht vertieften Seitenwandbereich übergeht. Die Wandabschnitte 28, 29 sind in einem dem Umrißprofil des Schneidenkörpers 18 entsprechenden Winkel zueinander angeordnet und stützen den an ihnen anliegenden Schneidenkörper 18 gegen Bearbeitungsdruck am Plattenträger 20 ab.

Der Plattenträger 20 ist ein flacher, quaderförmiger Körper, zu dessen Befestigung am Grundkörper 10 eine Spannschraube 30 dient. Die Spannschraube 30 greift durch eine im Plattenträger 20 etwa mittig angeordnete Bohrung 32 hindurch, die von einer konischen Ringschulter 34 umgeben ist, an welche sich der entsprechend geformte Kopf 36 der Spannschraube 30 abstützt. Die Spannschraube 30 greift in ein Spannstück 40 ein, das in nachstehend noch näher beschriebenen Aussparungen im Plattenträger 20 und im Grundkörper 10 angeordnet ist und beim Anziehen der Spannschraube 30 den Plattenträger 20 gegen die Auflagefläche 14 des Grundkörpers 10 spannt.

Das Spannstück 40 hat einen zylindrischen Sockel 44, an den sich zwei Führungsabschnitte 46, 48 aufeinanderfolgend aufbauen. Der Führungsabschnitt 46 ist von drei im rechten Winkel zueinander stehenden Seitenflächen 50, 52, 54 (Figur 6) und von einer schräg dazu angeordneten vierten Seitenfläche 56 begrenzt. Der Führungsabschnitt 48 hat einen quadratischen Querschnitt und ist dementsprechend von vier geraden, gleich großen Seitenflächen 58, 60, 62 und 64 begrenzt. Im Führungsabschnitt 48 ist zentral eine Gewindebohrung 65 für den Eingriff der Spannschraube 30 vorgesehen und zwischen dem Sockel 44 und dem Führungsabschnitt 46 ist eine Spannschulter 66 am Spannstück 40 gebildet.

Im Grundkörper 10 ist eine den Sockel 44 mit ausreichendem Spiel aufnehmende zylindrische Vertiefung 68 vorgesehen, die an einer Ringschulter 70 in eine im Querschnitt rechteckige Aussparung 72 (Figur 3) übergeht. Diese ist in der einen Abmessung von zwei parallelen Längswänden 74, 75 (Figur 4) begrenzt, zwischen welche der Führungsabschnitt 46 des Spannstücks 40 mit seinen Seitenflächen 50, 54 passend eingreift. Die andere Abmessung der Aussparung 72 ist so gewählt, daß das Spannstück 40 in Richtung des Pfeiles B in Figur 3 um den Einstellbereich des Schneidenkörpers 18 linear verschoben werden kann, dabei jedoch an einer Drehung gegenüber dem Grundkörper 10 gehindert ist. Die beiden Seitenflächen 50, 54 des Spannstücks 40 bilden auf diese Weise mit den zugeordneten Längswänden 74, 75 der Aussparung 72 eine Geradführung des Spannstücks 40 im Grundkörper 10.

Im Plattenträger 20 ist eine im Querschnitt rechteckige, zur Auflagefläche 14 hin offene Aussparung 76 (Figur 3 und 4) gebildet, in welche die Bohrung 32 für die Spannschraube 30 einmündet. Die Aussparung 76 ist quer zur Richtung des Pfeiles B in Figur 3 von zwei parallelen Seitenwänden 78, 79 begrenzt, zwischen welche der Führungsabschnitt 48 des Spannstücks 40 mit seinen Seitenflächen 60, 64 passend eingreift. Die andere Abmessung der Ausnehmung 76 ist so gewählt, daß der Plattenträger 20 quer zur Richtung des Pfeiles B um den Einstellbereich des Schneidenkörpers 18 linear gegenüber dem Spannstück 40 verschoben werden kann, dabei jedoch an einer Drehung gegenüber dem Spannstück 40 und damit gegenüber dem Grundkörper 10 gehindert ist. Die beiden Seitenflächen 60, 64 des Spannstücks 40 bilden auf diese Weise mit den zugeordneten Längswänden 78, 79 der Aussparung 76 eine Geradführung des Spannstücks 40 im Plattenträger 20 bzw. umgekehrt eine Geradführung des Plattenträgers 20 am Spannstück 40.

Der Führungsabschnitt 46 des Spannstücks 40 ist in der Aussparung 72 des Grundkörpers 10 durch eine Stellschraube 80 gegen Bearbeitungsdruck zusätzlich abgestützt, die gleichzeitig auch zur Einstellung des Schneidenkörpers 18 gegenüber dem Grundkörper 10 in der Richtung des Pfeiles B in Figur 3 dient. Die Stellschraube 80 ist im rechten Winkel zu den Seitenwänden 74, 75 der Aussparung 72 angeordnet und mit einem in diese hineinragenden kegeligen Schaftabschnitt 82 versehen, an welchem das Spannstück 40 mit seiner schrägen Seitenfläche 56 anliegt. Zum Einstellen und Abstützen des Schneidenkörpers 18 in Querrichtung ist eine zweite Stellschraube 84 vorgesehen, die koaxial zur Ausnehmung 76 in einer in diese einmündenden Gewindebohrung des Plattenträgers 20 gelagert ist und an welcher das Spannstück 40 mit seiner Seitenfläche 62 anliegt.

Beim Einstellen des Schneidenkörpers 18 nach dem Auswechseln oder im Falle einer Wendeschneidplatte nach dem Wenden wird zunächst die Spannschraube 30 leicht festgezogen und dann das Spannstück 40 durch entsprechendes Betätigen der Stellschraube 80 in Richtung des Pfeiles B eingestellt, wobei der Plattenträger 20 in dieser Richtung mitgenommen wird. Danach wird der Plattenträger 20 in der Querrichtung durch entsprechendes Betätigen der Stellschraube 84 eingestellt, wobei das Spannstück 40 seine Lage beibehält. Wenn der Schneidenkörper 18 die endgültige Position erreicht hat, wird die Spannschraube 30 voll angezogen und dadurch der Plattenträger 20 fest an den Grundkörper 10 angeklemmt.

Dieses Klemm- und Verstellsystem ermöglicht es, bei Diamant- oder Borazon-bestückten Werkzeugen den Hartschneidstoff direkt auf den Plattenträger 20 aufzulöten, wodurch eine etwas kürzere Bauform erreicht werden kann. Bei Werkzeugen für die Beabeitung von durchgehenden Bohrungen kann von einer Verstellmöglichkeit des Plattentragers 20 in Richtung des Pfeiles B in Figur 3 auch abgesehen werden, wodurch die Bauhöhe auf ein Minimum verringert und das Werkzeug für extrem kleine Bohrungsdurchmesser, beispielsweise von 12 mm, eingesetzt werden kann. Die beiden Geradeführungen für das Spannstück 40 könnten auch um einen anderen Winkel als um 90° zueinander angeordnet sein. Ferner wäre es auch möglich, den Plattenträger 20 selbst als Schneidenkörper auszubilden und mit mehreren Schneidkanten zu versehen. Das erfindungsgemäße Werkzeug eignet sich ferner optimal für axiale und radiale Formeinstechoperationen.

## Patentansprüche

1. Schneidwerkzeug für die Bearbeitung von Innen- und Außenkonturen an Werkstücken, mit mindestens einer Schneidplatte, die durch eine Spannschraube gegen eine Auflagefläche an einem Werkzeuggrundkörper gespannt ist, welcher mit Mitteln zum Einstellen der Position der Schneidplatte auf der Auflagefläche und zu deren zusätzlicher Abstützung gegen Bearbeitungsdruck in der eingestellten Position versehen ist, wobei die
Spannschraube (30) durch eine Bohrung (32) in der Schneidplatte (18, 20), hindurchgreiff und mit einem Kopf (36) versehen ist, der sich an einer die Bohrung (32) umgebenden Schulter (34) der Schneidplatte (18, 20) abstützt, gekennzeichnet durch folgende Merkmale:
a. die Spannschraube (30) ist in ein Spannstück (40) eingeschraubt, das in eine im Werkzeuggrundkörper (10) vorzugsweise unterhalb der Auflagefläche (14) für die Schneidplatte (18, 20) gebildete Aussparung (68, 72) unverdrehbar, jedoch durch eine Geradführung (50, 54, 74, 75) linear verschiebbar eingreift und mindestens eine Spannschulter (66) hat, welche durch Anziehen der Spannschraube (30) gegen eine Gegenschulter (70) am Werkzeuggrundkörper (10) spannbar ist; und
b. das Spannstück (40) ist mit einem Führungsansatz (48) versehen, welcher unverdrehbar, jedoch durch eine Geradfuhrung (60, 64, 78, 79) linear verschiebbar in eine Ausnehmung (76) in der Schneidplatte (18, 20) eingreift.

2. Schneidwerkzeug nach Anspruch 1, dadurch gekennzeichnet, daß das Spannstück (40) sowohl in die Ausnehmung (68, 72) des Werkzeuggrundkörpers (10) als auch in die Ausnehmung (76) der Schneidplatte (18, 20) linear verschiebbar eingreift und daß die Geradführung (50, 54, 74, 75) in der Ausnehmung (68, 72) des Werkzeuggrundkörpers (10) in einem Winkel zu der Geradführung (60, 64, 78, 79) in der Ausnehmung (76) der Schneidplatte (18, 20) angeordnet ist.

3. Schneidwerkzeug nach Anspruch 1 oder 2, dadurch gekennzeichnet, daß die für den Eingriff der Spannschraube (30) vorgesehene Gewindebohrung (65) im Spannstück (40) in dessen in die Ausnehmung (76) der Schneidplatte (18, 20) eingreifenden Führungsansatz (48) vorgesehen ist.

4. Schneidwerkzeug nach einem der vorhergehenden Ansprüche, mit einer Geradführung für das Spannstück im Werkzeuggrundkörper, dadurch gekennzeichnet, daß zum Abstützen der Schneidplatte (18, 20) gegen Bearbeitungdruck ein im Werkzeuggrundkörper (10) drehbar gelagertes und durch Drehen einstellbares Anschlagorgan (80) für das Spannstück (40) dient.

5. Schneidwerkzeug nach Anspruch 4, dadurch gekennzeichnet, daß als Anschlagorgan eine Stellschraube (80) dient, die in einer mindestens annähernd senkrecht zur Geradführung (50, 54, 74, 75) angeordneten Gewindebohrung gelagert ist und in die Ausnehmung (72) mit einem kegeligen Schaftabschnitt (82) hineinragt, an welchem das Spannstück (40) mit einer entsprechend schräg gestellten Seitenwand (56) anliegt.

6. Schneidwerkzeug nach Anspruch 5, mit einer ersten Geradführung des Spannstücks im Werkzeuggrundkörper und einer zweiten Geradführung in der Schneidplatte, dadurch gekennzeichnet, daß zur Abstützung des Spannstücks (40) in der Schneidplatte (18, 20) bzw. umgekehrt eine mindestens annähernd parallel zur zweiten Geradführung (60, 64, 78, 79) angeordnete, in der Schneidplatte (18, 20) drehbar gelagerte zweite Stellschraube (84) dient und daß die zur Abstützung des Spannstücks (40) am Werkzeuggrundkörper (10) dienende erste Stellschraube (80) seitlich neben der zweiten Stellschraube (84) angeordnet ist.

7. Schneidwerkzeug nach einem der vorhergehenden Ansprüche, dadurch gekennzeichnet, daß die Schneidplatte (18, 20) einen mindestens im wesentlichen quaderförmigen Plattenträger (29) hat, der an mindestens einer Stelle seines Umfangs, vorzugsweise an mindestens einer Ecke, einen vertieften Seitenwandbereich (24) hat, der als Auflagefläche für einen auswechselbar am Plattenträger (20) befestigten, das eigentliche Schneidelement bildenden Schneidenkörper (18) dient, und daß die am Übergang des vertieften Seitenwandbereichs (24) in den nicht vertieften Bereich der Seitenwand (26) gebildeten Wandflächen (28, 29) den Schneidenkörper (18) gegen Bearbeitungsdruck am Plattenträger (20) abstützen.

8. Schneidwerkzeug nach Anspruch 1, dadurch gekennzeichnet, daß die Schneidplatte (18, 20) einstückig ausgebildet und vorzugsweise mit mehreren Schneidkanten versehen ist.

## Claims

1. Cutting tool for the machining of inner and outer contours on workpieces, having at least one cutting plate which is clamped by a clamping screw against a bearing surface on a main body of the tool, which main body is provided with means for adjusting the position of the cutting plate on the bearing surface and for its additional support against machining pressure in the adjusted position, the clamping screw (30) reaching through a bore (32) in the cutting plate (18, 20) and being provided with a head (36) supported on a shoulder (34) of the cutting plate (18, 20), which shoulder surrounds the bore (32), characterized by the following features:
a. the clamping screw (30) is screwed into a clamping piece (40) which engages, such that it cannot be twisted but can be displaced linearly by a straight-line guide (50, 54, 74, 75), in a cavity (68, 72) formed in the main body (10) of the tool, preferably beneath the bearing surface (14) for the cutting plate (18, 20), and has at least one clamping shoulder (66) which can be clamped, by tightening of the clamping screw (30), against a counter-shoulder (70) on the main body (10) of the tool; and
b. the clamping piece (40) is provided with a guide lug (48) which engages, such that it cannot be twisted but can be displaced linearly by a straight-line guide (60, 64, 78, 79), in a recess (76) in the cutting plate (18, 20).

2. Cutting tool according to Claim 1, characterized in that the clamping piece (40) engages, in a linearly displaceable manner, both in the recess (68, 72) of the main body (10) of the tool and in the recess (76) of the cutting plate (18, 20) and in that the straight-line guide (50, 54, 74, 75) is disposed in the recess (68, 72) of the main body (10) of the tool at an angle to the straight-line guide (60, 64, 78, 79) in the recess (76) of the cutting plate (18, 20).

3. Cutting tool according to Claim 1 or 2, characterized in that the threaded bore (65) provided for the engagement of the clamping screw (30) is provided in the clamping piece (40) in its guide lug (48), which guide lug engages in the recess (76) of the cutting plate (18, 20).

4. Cutting tool according to one of the preceding claims, having a straight-line guide for the clamping piece in the main body of the tool, characterized in that a stop member (80) for the clamping piece (40), which stop member is mounted rotatably in the main body (10) of the tool and can be adjusted by rotation, serves to support the cutting plate (18, 20) against machining pressure.

5. Cutting tool according to Claim 4, characterized in that an adjusting screw (80) serves as the stop member, which adjusting screw is mounted in a threaded bore disposed at least approximately perpendicular to the straight-line guide (50, 54, 74, 75) and juts into the recess (72) with a conical shank segment (82), against which the clamping piece (40) bears with a correspondingly sloped side wall (56).

6. Cutting tool according to Claim 5, having a first straight-line guide for the clamping piece in the main body of the tool and having a second straight-line guide in the cutting plate, characterized in that a second adjusting screw (84), which is disposed at least approximately parallel to the second straight-line guide (60, 64, 78, 79) and is mounted rotatably in the cutting plate (18, 20), serves to support the clamping piece (40) in the cutting plate (18, 20), or vice versa, and in that the first adjusting screw (80), which serves to support the clamping piece (40) on the main body (10) of the tool, is disposed laterally next to the second adjusting screw (84).

7. Cutting tool according to one of the preceding claims, characterized in that the cutting plate (18, 20) has an at least essentially cuboid plate carrier (29) which has, at at least one point on its periphery, preferably at at least one corner, a recessed side wall region (24), which serves as a bearing surface for a cutter body (18) fastened exchangeably to the plate carrier (20) and forming the actual cutting element, and in that the wall faces (28, 29) formed at the transition of the recessed side wall region (24) into the non-recessed region of the side wall (26) support the cutter body (18) against machining pressure on the plate carrier (20).

8. Cutting tool according to Claim 1, characterized in that the cutting plate (18, 20) is configured in one piece and is provided preferably with a plurality of cutting edges.

## Revendications

1. Outil de coupe pour l'usinage de contours internes et externes sur des outils, avec au moins une plaque de découpe qui est bloquée par une vis de serrage contre une face d'appui sur un corps de base d'outil, outil qui est muni de moyens pour régler la position de la plaque de découpe sur la face d'appui et pour son appui additionnel contre la pression d'usinage dans la position réglée, outil dans lequel la vis de serrage (30) passe à travers un alésage (32) de la plaque de coupe (18, 20) et est muni d'une tête (36), qui s'appuie sur un épaulement (34) entourant 'l'alésage (32) de la plaque de coupe (18, 20), caractérisé en ce que;
- a) la vis de serrage (30) est vissée dans une pièce de serrage (40), qui s'insère sans pivotement possible dans un évidement (68, 72) formé dans le corps de base de l'outil (10) de préférence en dessous de la face d'appui (14) de la plaque de coupe (18, 20), qui peut toutefois être déplacée linéairement à travers un guidage droit (50, 54, 74, 75) et qui a au moins un épaulement de blocage (66), qui est bloqué par vissage de la vis de serrage (30) contre un contre-épaulement (70) sur le corps de base de l'outil (10), et
- b) la pièce de serrage (40) est munie d'un prolongement de guidage (48), qui s'insère sans pivotement possible, mais avec déplacement linéaire possible au moyen d'un guidage droit (60, 64, 78, 79) dans un évidement (76) de la plaque de coupe (18, 20).

2. Outil de coupe selon la revendication 1, caractérisé en ce que :
- la pièce de serrage (40) s'enclenche avec déplacement linéaire possible aussi bien dans l'évidement (68, 72) du corps de base de l'outil (10) que dans l'évidement (76) de la plaque de coupe (18, 20) et,
- le guidage droit (50, 54, 74, 75) est placé dans l'évidement (68, 72) du corps de base de l'outil (10) sous un certain angle par rapport au guidage droit (60, 64, 78, 79) dans l'évidement (76) de la plaque de coupe (18, 20).

3. Outil de coupe selon les revendications 1 et 2, caractérisé en ce que l'alésage fileté (65) prévu pour l'engagement de la vis de serrage (30)dans la pièce de serrage (40) est ménagé dans le prolongement de guidage (48) de celle-ci s'enclenchant dans l'évidement (76) de la plaque de coupe (18, 20).

4. Outil de coupe selon une des revendications précédentes, avec un guidage droit pour la pièce de serrage du corps de base de l'outil, caractérisé en ce que pour étayer la plaque d'appui (18, 20) contre la pression d'usinage on utilise un organe de butée (80) pour la pièce de serrage monté et pouvant tourner dans le corps de base de l'outil (10) et réglable grâce à la rotation.

5. Outil de coupe selon la revendication 4, caractérisé en ce que comme organe de butée on se sert d'une vis de réglage (80) qui est logée dans un alésage fileté situé au moins approximativement perpendiculaire au guidage droit (50, 54, 74, 75) et dépasse dans l'évidement (72) par un tronçon de tige conique (82), contre lequel adhère la pièce de serrage (40) par une paroi latérale adéquatement inclinée.

6. Outil de coupe selon la revendication 5, avec un premier guidage droit de la pièce de serrage dans le corps de base de l'outil et un deuxième guidage droit dans la plaque de coupe, caractérisé en ce que pour appuyer la plaque de serrage (40) dans la plaque de coupe (18, 20) ou inversement on utilise une deuxième vis de réglage (84) logée en rotation dans la plaque de coupe (18, 20), disposée au moins approximativement parallèlement au deuxième guidage droit (60, 64, 78, 79) et en ce que la première vis de réglage (80) servant à l'appui de la pièce de serrage (40) sur le corps de base de l'outil (10) est située latéralement à côté de la deuxième vis de réglage (84).

7. Outil de coupe selon une des revendications précédentes, caractérisé en ce que la plaque de coupe (18, 20) a au moins un support de plaque (29) essentiellement de forme parallèpipédique, qui a au moins en un endroit de son pourtour, de préférence au moins en un coin, une zone de paroi latérale (24) en creux, qui sert comme surface d'appui à un corps de coupe (18) formant l'élément de coupe approprié, fixé avec interchangeabilité possible sur le support de plaque (20), et en ce que les surfaces de paroi (28, 29) constituées à la transition de la zone de paroi latérale en creux (24) dans la zone de paroi latérale non fraisée servent d'appui pour le corps de coupe (18) contre la pression d'usinage sur le support de plaque (20).

8. Outil de coupe selon la revendication 1, caractérisé en ce que la plaque de coupe (18, 20) est réalisée en une seule pièce et est munie de préférence de plusieurs arètes de coupe.
